# EUROPEAN PATENT SPECIFICATION

(11) **EP 4 447 209 B1**
(45) Date of publication and mention of the grant of the patent: **28.10.2026**
(21) Application number: 23747244.4
(22) Date of filing: 18.01.2023
(51) Int. Cl.: H01M 50/204, H01M 50/209, H01M 50/242, H01M 50/244, H01M 50/251, H01M 50/258, H01M 50/262, H01M 50/289, H01M 50/291

(54) **ENERGY STORAGE SYSTEM BATTERY PACK**
BATTERIEPACK EINES ENERGIESPEICHERSYSTEMS
BLOC-BATTERIE DE SYSTÈME DE STOCKAGE D'ÉNERGIE

(30) Priority: 25.01.2022 KR 20220010564
(43) Date of publication of application: 16.10.2024
(73) Proprietor: Hanwha Solutions Corporation, Jung-gu Seoul 04541 (KR)
(72) Inventor: YANG, Eun Seok, Seoul 04541 (KR)
(74) Representative: HGF
(86) International application number: PCT/KR2023/000843
(87) International publication number: WO 2023/146202

(56) References cited:
- CN-U- 210 576 089
- CN-U- 212 366 090
- CN-U- 213 459 926
- KR-A- 20130 027 993
- KR-B1- 101 495 227
- KR-B1- 102 097 779
- US-A1- 2013 071 705
- US-B2- 9 601 731

## Description

### Technical Field

The present disclosure relates to a battery pack structure, and more specifically, to a battery pack for an energy storage system that has ease of assembling and impact absorption.

### Background Art

In general, batteries are currently used as a device to store electrical energy in many places, and most primary and secondary batteries are cylindrical, prismatic, or pouch. Secondary batteries, which are rechargeable for use, are widely used in portable electronic devices such as smartphones and laptops, as well as electric vehicles that may be rechargeable by using batteries. Recently, battery cells connected in series/parallel are used in an energy storage system (ESS), which stores and uses electricity made from solar energy, wind power, or the like.

In most cases, methods of connecting cylindrical battery cells in series/parallel include welding cathode and anode terminals of battery cells by using other external connecting plates (Bus Bar). At this time, the current capacity may be increased through a parallel connection (connecting between cathodes and between anodes), and the voltage may be increased through a series connection (connecting a cathode of a battery to an anode of another battery). In most cases, welding is done using a nickel plate, which is a material which is also used in a cathode and an anode of a battery cell. Commonly used electrical devices (from portable to electric vehicles or ESS) are 12 V, 24 V, 48 V, 72 V, 110 V, 200 V, 380 V, or the like, and thus, several to dozens of serial connections are required, and depending on the amount of energy used, several to hundreds or thousands of parallel connections may be also required.

Conventionally, in the case where a cathode and anode for a battery are connected in series and parallel, a method of connecting a plurality of cells in series and parallel by using spot welding or laser welding, which instantaneously applies voltage between a separate electrode plate and a battery electrode, is used. A battery module refers to a case where the voltage is the same as a single battery cell, but the current capacity is increased. When an (+) electrode of one battery module and an (-) electrode of another battery module, which have the current capacity increased by connecting a plurality of battery cells in parallel, are connected in several times (series connection), the voltage may be increased to a desired level. This is called a battery pack.

In the case of battery packs of the related art, fastening may be made by restricting 3-axis degrees of freedom of a battery module in three axes of x, y, and z using bolting, rigid materials, or the like. Accordingly, a lot of man-hours are required when fastening. In addition, when external impacts such as earthquakes, drops, or the like are transmitted directly to battery modules, which might cause problems in the battery.

US 9 601 731 B2 discloses a battery case structure that enables both cooling and heating of a battery module through a guided zigzag airflow path, improving thermal efficiency and ensuring uniform temperature control. It also provides enhanced structural support and shock protection using strategically placed partition walls and elastic members, thereby minimizing vibration-induced damage and ensuring reliable operation in vehicles.

KR 102 097 779 B1 discloses a household energy storage device that allows for individual battery cell replacement by using a tray and housing system combined with a rotating mechanism to identify and remove defective cells without replacing the entire battery pack. This design reduces economic burden and improves user convenience by incorporating manual or automated mechanisms for battery rotation, sliding trays for easy access, and spring-loaded lifting components to simplify maintenance and replacement procedures.

US 2013/071705 A1 shows a packaging structure for electrochemical devices that includes an array of electrically insulating cell receptacles designed to securely position the bottom portions of electrochemical cells with precise spacing. It also describes a multi-layered battery packaging system comprising inner and outer covers, a stabilizing section, thermal insulation, and removable attachments, all aimed at enhancing cell alignment, thermal management, and structural integrity.

### Disclosure

### Technical Problem

According to the present disclosure, a battery pack for an energy storage system is provided, in which fixing in some of the axial directions is made using elastic members when installing a battery module, so that an assembly man-hour may be significantly reduced and after installation, stability may be ensured by elastically responding to external impacts.

### Technical Solution

According to the present disclosure, there is provided a battery pack for an energy storage system as defined in claim 1 of the appended claims.

In this regard, the first elastic support part includes a pair of first support members, each of which includes a support part supporting one end of the lower ends of the battery module and a locking part that is bent from the support part to restrict movement of the battery module in a horizontal direction, wherein a leaf spring is provided on one of the locking parts.

A slot may be formed in a horizontal direction in the locking part, and a guide blade formed on the battery may be inserted through and guided on the slot.

The second elastic support part includes a second support member disposed on the battery module and horizontally fixed to the case, and a leaf spring to elastically support the upper end of the battery module is provided under the second support member.

The battery module is provided in multiple stages inside the case.

The first elastic support part is fixedly provided on the second elastic support part.

The battery module may be provided in plurality overlapping in the front and rear directions inside the case, and a plate-shaped middle support part is fixedly assembled to the case to fix and support a rear battery module, between the battery modules, and in the front of a battery module located at the front-most position, a plate-shaped front support part is assembled in the case.

An elastic member may be included between the battery module and the middle support part or between the battery module and the front support part.

### Advantageous Effects of the Disclosure

According to the configuration described above, a battery pack for an energy storage system according to the present disclosure may be assembled and fixed easily and quickly because a part of a fastening process using a fastening member may be omitted.

In addition, a battery pack for an energy storage system according to the present disclosure may alleviate impacts applied to a battery module because when external impacts are applied after the battery module is assembled, an elastic member absorbs part of the impacts.

### Brief Description of Drawings

FIG. 1 is an external perspective view of a battery pack for an energy storage system according to an embodiment of the present disclosure.
FIG. 2 is a perspective view of a battery pack for an energy storage system according to an embodiment of the present disclosure, of which a door is open.
FIG. 3 is a perspective view of a battery pack for an energy storage system according to an embodiment of the present disclosure before battery modules therein are assembled.
FIG. 4 and 5 are perspective views of a first elastic support part and a second elastic support part, which are components of a battery pack for an energy storage system according to an embodiment of the present disclosure.
FIG. 6 is a perspective view of a battery pack for an energy storage system according to an embodiment of the present disclosure, of which components are assembled.
FIG. 7 is an exploded perspective view of a battery pack for an energy storage system according to an embodiment of the present disclosure.
FIG. 8 and 9 are perspective views of a battery pack for an energy storage system according to an embodiment of the present disclosure, viewed from different angles, in which batteries are provided overlapping on the same layer.
FIG. 10 is a schematic diagram of a battery pack for an energy storage system according to another embodiment of the present disclosure.

### Mode For Invention

The words and terms used in this specification and claims are not to be construed as limited in their usual or dictionary meanings, but according to the principle that an inventor may define terms and concepts to explain his or her invention in the best way, they must be construed as meanings and concepts in accord with technical ideas of the present disclosure.

Therefore, embodiments described in this specification and configurations shown in diagrams correspond to preferred embodiments of the present closure, and do not represent the entire technical idea of the present disclosure, so that corresponding configurations may be replaced by various equivalents and variations at the time of filing of the present disclosure.

In this specification, the terms "comprise," "include," and/or "have," when used herein, specify the presence of stated features, numbers, steps, operations, components, parts, and/or combinations thereof, but do not preclude possibility of presence or additionality of one or more other features, numbers, steps, operations, components, parts and/or combinations thereof.

The wording "a component located "front," "rear," "on," or "under" another component" includes not only being located "front," "rear," "on," or "under" in direct contact with the other component, but also a case where another component is placed therebetween, unless there are special circumstances. In addition, the wording that a component is "connected" to the other component includes not only being directly connected to each other, but also indirectly connected to each other, unless there are special circumstances.

Hereinafter, a battery pack for an energy storage system according to an embodiment of the present disclosure will be described with reference to diagrams.

A battery pack 1 for an energy storage system according to an embodiment of the present disclosure includes a case 10, a first elastic support part, a second elastic support part, a middle support part 50, and a front support part 40.

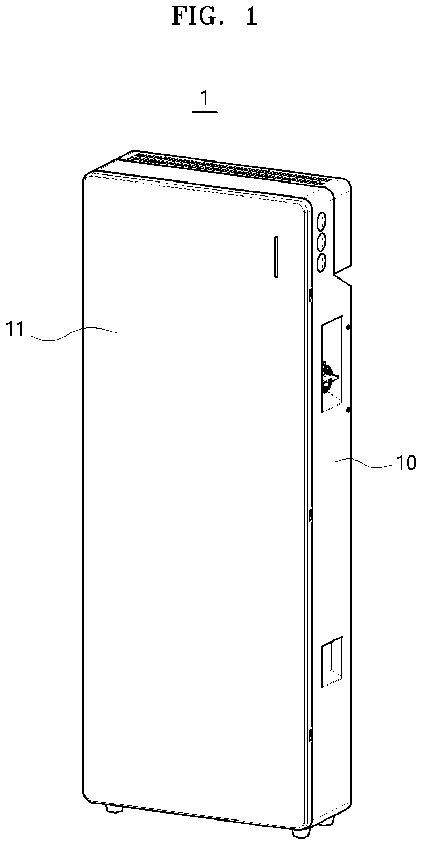

Referring to FIGS. 1 to 3, the case 10 includes battery modules 20 and 30.

In this regard, the case 10 may be in the shape of a roughly rectangular parallelepiped cabinet. At the front, a door 11 may be hinged thereto to allow opening and closing. Within the case 10, the battery modules 20 and 30 may be provided in three layers and in multiple stages. A control system may be provided on the uppermost part within the case 10. That is, the battery modules 20 and 30 are provided in multiple stages within the case 10, and in the present embodiment, may be provided in three stages. Additionally, the battery modules 20 and 30 may be provided overlapping in the front and rear directions, as well as in multiple stages. In this regard, each of two battery modules 20 and 30 is provided overlapping in the front and rear directions while the middle support part 50 is provided therebetween.

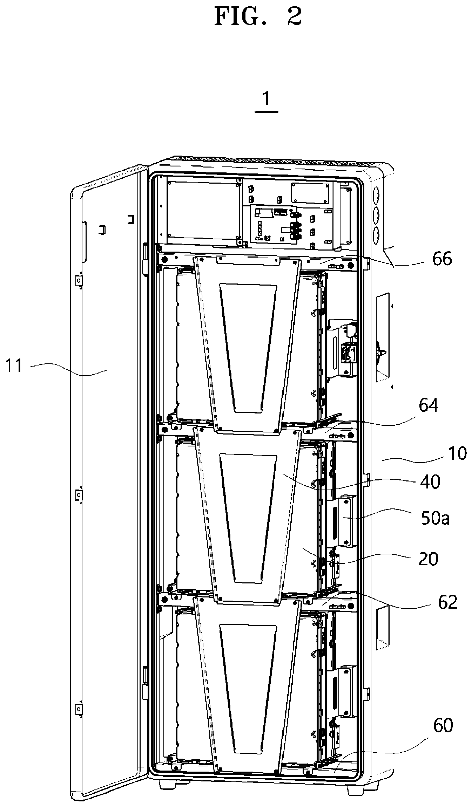

Referring to FIGS. 2 to 9, the first elastic support part is fixed to the inside of the case 10, such that lower ends of the battery modules 20 and 30 are supported and seated, and, at one side of the lower ends, including elastic members in the form of leaf springs 71a, 73a, and 75a which are elastically support the battery modules 20 and 30 toward the other side.

In this regard, the first elastic support part includes a pair of locking members 70-75, each including a support part supporting one end of the lower ends of the battery modules 20 and 30 and a locking part bent from the support part to restrict movement of the battery modules 20 and 30 in a horizontal direction, wherein any one of the locking parts includes elastic members in the form of leaf springs 71a, 73a and 75a.

In this regard, a slot 72a is formed in a horizontal direction in the locking part, and guide blades 20a and 30a formed on the battery modules 20 and 30 may be inserted through and guided into the slot 72a.

In this regard, the first elastic support part includes the first support members 70-75 placed in pairs. The first support members 70-75 may be spaced apart by the width of the battery modules 20 and 30 and fixed on second support members 60-66. In this way, the second support members 60-66 and the first support members 70-75 are arranged such that the first support members 70-75 are fixed on the second support members 60-66 and are spaced apart by the height of the battery modules 20 and 30, and this method is repeated to stack the battery modules 20 and 30 in multiple stages.

In this regard, the first support members 70-75 include support parts and locking parts, and the support parts are fixed to the second support members 60-65 by using fastening means. Each locking part is bent vertically from the support part and the lower part of the side of each of the battery modules 20 and 30 is caught thereby. Leaf springs 71a, 73a, and 75a are provided in the locking parts of the first support members 70-75 at the opposite side. Therefore, when the leaf springs 71a, 73a and 75a are pushed by one side of the battery modules 20 and 30 and the guide blades 20a and 30a located opposite thereto are allowed to pass through the slot 72a, the installation of the lower ends of the battery modules 20 and 30 is completed. That is, without any separate fastening members, the lower ends of the battery modules 20 and 30 may be seated.

Referring to FIGS. 2 to 9, the second elastic support part supports upper ends of the battery modules 20 and 30 and includes, on one side thereof, elastic members in the form of leaf springs 62a, 63a, 64a, 65a, and 66a which elastically support the battery modules 20 and 30 downward.

In this regard, the second elastic support part includes second support members 60-66 disposed on the battery modules 20 and 30 and fixed horizontally to the case 10, and second elastic members in the form of leaf springs 62a, 63a, 64a, 65a and 66a included at the lower part of the second support members 60-66 to elastically support the upper ends of the battery modules 20 and 30. One or a pair of the second support members 60-66 is provided horizontally and in parallel and is fixed to the case 10. In this regard, when the battery modules 20 and 30 are installed in a single pair, the second support members 60-66 are provided above and under the battery modules 20 and 30, and when installed in multiple stages, as in the present embodiment, when provided in 3 stages, the second support members 60-66 may be provided in a total of 4 stages.

In this regard, the first elastic support part is fixedly provided on the second elastic support part. That is, first support members 70-75 are provided and supported on the second support members 60-65. The second support members 60-66 are fastened to and fixed to the case 10, and the first support members 70-75 may be fastened to and fixed to the second support members 60-66. Therefore, the battery modules 20 and 30 are first supported by the first support members 70-75, and the weight thereof is transmitted to the frame structure of the case 10 through the second support members 60-65 and supported by the same.

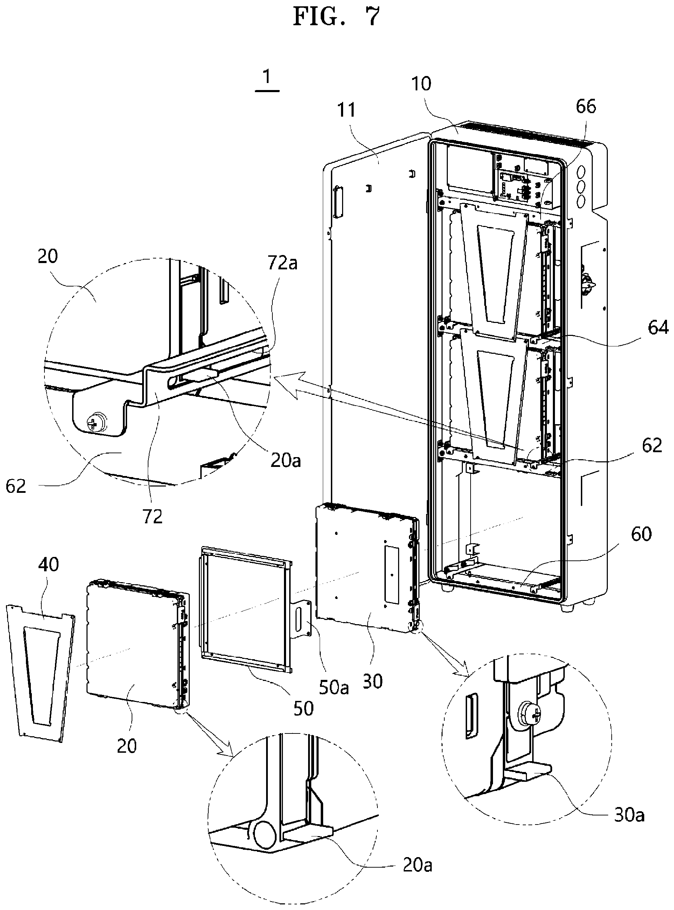

In this regard, the battery modules 20 and 30 may be provided in plurality overlapping in the front and rear directions within the case 10, and, between the battery modules 20 and 30, a plate-shaped middle support part 50 may be fixedly assembled to the case 10 to fixedly support the battery module 30 in the rear side thereof, and in front of the battery module 20 located at the front, a plate-shaped front support part 40 may be assembled on the case 10 or the second support members 63, 65, and 66. In this regard, referring to FIG. 7, a fastening part 50a may formed on opposite sides of the middle support part 50 and may be fastened to the case 10. Accordingly, the battery module 30 provided on the inside may be fixed in the front and rear directions by the middle support part 50. In addition, the front support part 40 may be fastened and fixed to the second support members 63, 65, and 66 located on or under of the battery module 20 by the fastening members, and the battery module 20 located in an outer position may be supported while being between the front support part 40 and the middle support part 50.

In this regard, an elastic member may be included between the battery modules 20 and 30 and the middle support part 50 or between the battery module 20 and the front support part 40. In this way, for example, by installing a leaf spring between the front support part 40 and the middle support part 50, impacts applied to the battery modules 20 and 30 may be reduced.

Referring to FIG. 1, an external perspective view showing the battery pack 1 for an energy storage system according to an embodiment of the present disclosure is shown. The battery pack 1 has the appearance in the shape of a roughly rectangular parallelepiped cabinet, and a plurality of battery modules 20 and 30 are provided in multiple stages thereinside, and a door 11 may be provided in the front thereof.

Referring to FIG. 2, a perspective view of a battery pack for an energy storage system, having an open door, according to an embodiment of the present disclosure is shown. While the door 11 is open, the battery modules 20 and 30 are provided in three stages inside the battery pack 1, and a control system is provided on the uppermost part thereof.

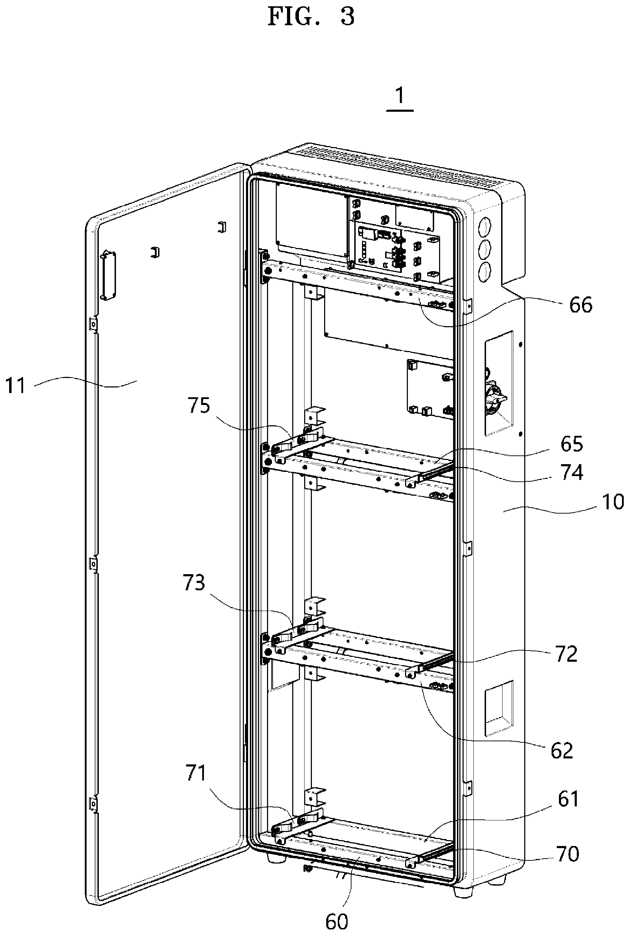

Referring to FIG. 3, a perspective view of a battery pack for an energy storage system according to an embodiment of the present disclosure is shown before battery modules are assembled inside the battery pack. The first support members 70-75 and the second support members 60-66 are provided such that the battery modules 20 and 30 may be provided in three stages. The first support members 70-75 are fastened to and supported on the second support members 60-65 and transmit the weight of the battery modules 20 and 30.

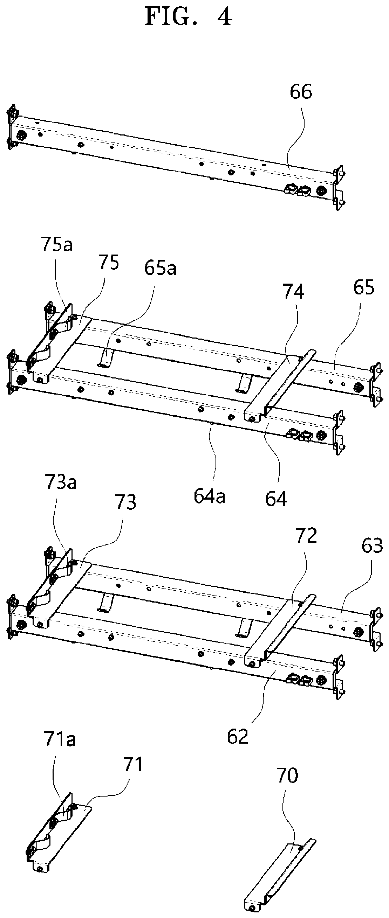

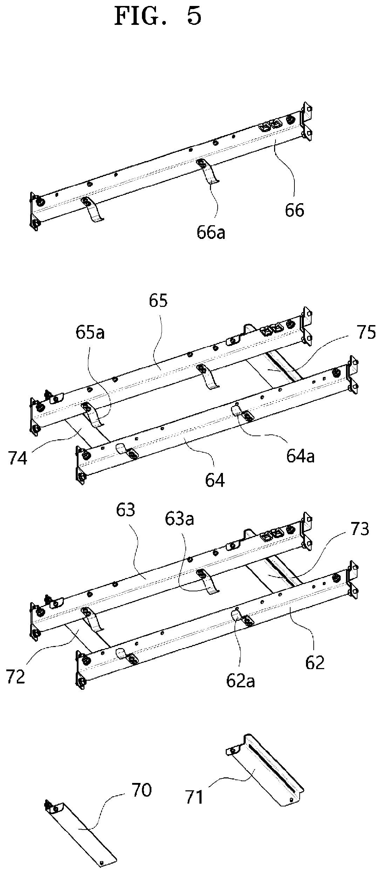

Referring to FIGS. 4 and 5, a perspective view of a first elastic support part and a second elastic support part, which are some components of a battery pack for an energy storage system according to an embodiment of the present invention, is shown. The first support members 70-75 are provided in a pair at a right angle to a pair of second support members 60-65. Both end of the second support members 60-65 are supported by being fastened to the case 10, and are provided in parallel as a pair, and the first support members 70-75 are fastened and fixed to the upper parts thereof. The first support members 70-75 each include a support part and a locking part bent at 90 degrees, and leaf springs 71a, 73a and 75a are included at only one of a pair of first support members 70-75, and the slot 72a is formed in the first support member located opposite thereto. The leaf springs 62a, 63a, 64a, 65a, and 66a may be provided on the lower parts of the second support members 62-65, and optionally, the number and location thereof may be determined.

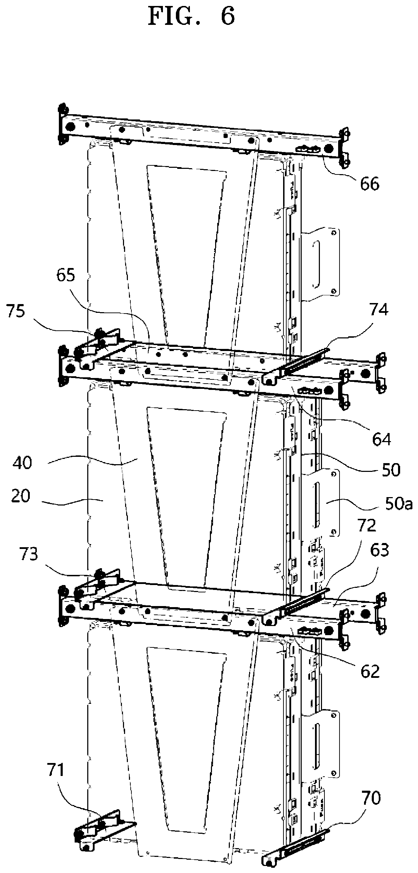

Referring to FIG. 6, a perspective view of a battery pack for an energy storage system according to an embodiment of the present disclosure, of which components therein are assembled, is shown. The battery modules 20 and 30 are provided in three stages between the second support members 60-66, and the battery modules 20 and 30 may be provided overlapping in the front and rear directions in every stage. Therefore, referring to FIG. 6, in up and down directions, the battery modules 20 and 30 may be seated and supported by the second support members 60-66 and the leaf springs 62a, 63a, 64a, 65a, and 66a, and in the left and right directions, the battery modules 20 and 30 may be seated by the first support parts 70-75 and the leaf springs 71a, 73a, and 75a, and in the front and rear directions, the battery modules 20 and 30 may fixed and supported by the middle support part 50 and the front support part 40.

Referring to FIG. 7, an exploded perspective view of a battery pack for an energy storage system according to an embodiment of the present disclosure is shown. Among three stages, the battery modules 20 and 30, the middle support part 50, and the front support part 40 on the lowest level are disassembled. First, the battery module 30 in the rear direction is inserted. At this time, a guide blade 30a of the rear battery module 30 is inserted into the slot 72a of the first support member and is guided, and the opposite side thereof may be elastically supported by the leaf springs 71a, 73a, and 75a. Next, the fastening part 50a of the middle support part 50 may be fastened to the case 10, thereby fixing. The battery module 20 in the front direction is assembled in the same way, and finally the front support part 40 is fastened and fixed to the second support members 60-66.

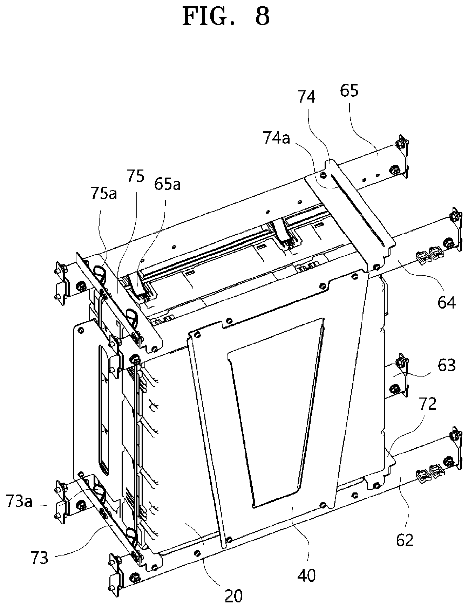

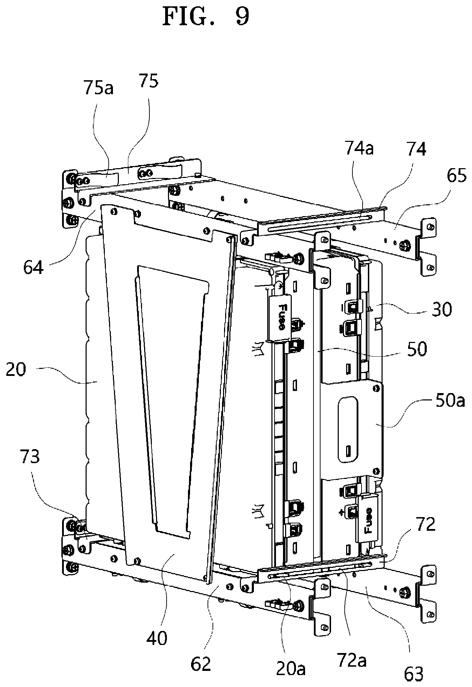

Referring to FIGS. 8 and 9, perspective views of a battery pack for an energy storage system according to an embodiment of the present disclosure, viewed from different angles, in which batteries are provided overlapping on the same layer, are shown. In this regard, the lengths of the second support members 60-65 are greater than those of the battery modules 20 and 30, which is designed for installation of battery modules with different specifications, that is, with greater widths. Based on FIGS. 8 and 9, after assembly, in upper and lower directions, the upper parts of the battery modules 20 and 30 are supported by the leaf springs 62a, 63a, 64a, 65a, and 66a, and the lower parts thereof are supported by the first support parts 70-75. With respect to the left and right directions, the left sides of the battery modules 20 and 30 are supported by the leaf springs 71a, 73a, and 75a, and the right sides thereof are supported by locking parts of the first support member 70-75. In the front and rear directions, the battery module 30 placed in an inner position is supported by the case 10 and the middle support part 50, and the battery module 20 placed in an outer position may be supported by the middle support part 50 and the front support part 40.

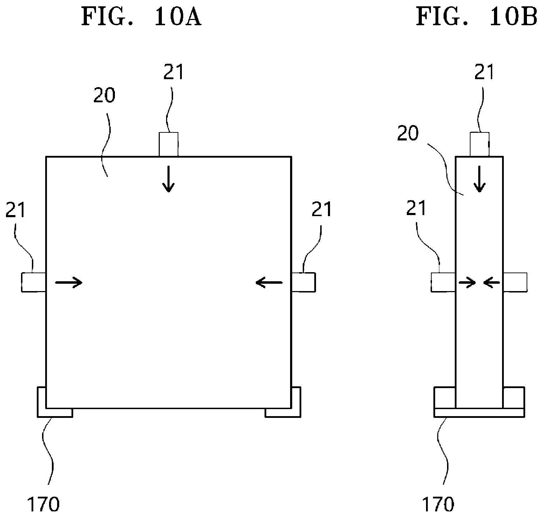

FIG. 10 is a schematic diagram of a battery pack for an energy storage system according to another embodiment of the present disclosure. In the case of (a), which is a schematic diagram of the embodiments described above, the lower end of the battery module 20 may be supported by brackets 170 and the battery module 20 is supported by elastic members 21 on the left and right sides, and in the case of (b), the schematic diagram shows that the elastic members 21 may be provided in the front and rear directions. In other words, it shows that elastic members may be provided in various positions with respect to three axes depending on design needs.

Although the embodiments of the present disclosure have been described, the present disclosure is not limited to the embodiments presented in this specification, and those skilled in the art will appreciate that other embodiments may fall within the scope of the claims.

### Industrial Applicability

The present disclosure may be applied to a battery pack for an energy storage system.

## Claims

1. A battery pack (1) for an energy storage system, the battery pack (1) comprising:
a case (10) in which a battery module (20, 30) is placed,
a first elastic support part extending in one direction, fixed to the inside of the case (10), allowing opposite lower ends of the battery module (20, 30) to be supported and seated, wherein the first elastic support part comprises a pair of first support members (70-75),
each first support member (70-75) including:
a support part supporting one of the lower ends of the battery module (20, 30), and
a locking part bent from the support part to restrict movement of the battery module (20, 30) in a horizontal direction,
wherein a leaf spring (71a, 73a, 75a) is included on one of the locking parts and elastically supports one side of the lower end of the battery module (20, 30) toward another side of the lower end, and
a second elastic support part extending in a direction crossing the first elastic support part, supporting an upper end of the battery module (20, 30), wherein the second elastic support part comprises
a second support member (60-66) disposed on the battery module (20, 30) and horizontally fixed to the case (10), and
a leaf spring (62a-66a) provided under the second support member (60-66) to elastically support the upper part of the battery module (20, 30) downward,
wherein the battery module (20, 30) is provided in multiple stages within the case (10),
wherein the first elastic support part is fixedly provided on the second elastic support part,
wherein the first elastic support part elastically supports a lower part of a battery module (20, 30) disposed above the first elastic support part, and the second elastic support part elastically supports an upper part of another battery module (20, 30) disposed below the second elastic support part.

2. The battery pack (1) for an energy storage system of claim 1, wherein a slot (72a) is formed in a horizontal direction in the locking part, and a guide blade (20a, 30a) formed on the battery module (20, 30) is inserted therethrough and guided on the slot (72a).

3. The battery pack (1) for an energy storage system of claim 1, wherein the battery module (20, 30) is provided in plurality overlapping in front and rear directions within the case (10), and between the battery modules (20, 30), a middle support part (50) formed in a plate-shape is fixedly assembled to the case (10) to fixedly support a battery module (30) in a rear side, and in the front of a battery module (20) located at the front-most position, a front support part (40) in a plate-shape is assembled in the case (10).

4. The battery pack (1) for an energy storage system of claim 3, wherein an elastic member is included between the battery module (20, 30) and the middle support part (50) or between the battery module (20, 30) and the front support part (40).

## Patentansprüche

1. Batteriepack (1) für ein Energiespeichersystem, wobei das Batteriepack (1) Folgendes umfasst:
ein Gehäuse (10), in dem ein Batteriemodul (20, 30) platziert ist,
ein erstes elastisches Stützteil, das sich in einer Richtung erstreckt, an der Innenseite des Gehäuses (10) befestigt, wodurch erlaubt wird, dass gegenüberliegende untere Enden des Batteriemoduls (20, 30) gestützt und gelagert werden, wobei das erste elastische Stützteil ein Paar von ersten Stützelementen (70-75) umfasst,
wobei jedes erste Stützelement (70-75) Folgendes beinhaltet:
ein Stützteil, das eines der unteren Enden des Batteriemoduls (20, 30) stützt, und
ein Verriegelungsteil, das von dem Stützteil gebogen ist, um Bewegung des Batteriemoduls (20, 30) in einer horizontalen Richtung zu begrenzen,
wobei eine Blattfeder (71a, 73a, 75a) an einem der Verriegelungsteile enthalten ist und eine Seite des unteren Endes des Batteriemoduls (20, 30) zu einer anderen Seite des unteren Endes elastisch stützt, und
ein zweites elastisches Stützteil, das sich in einer Richtung erstreckt, die das erste elastische Stützteil kreuzt, das ein oberes Ende des Batteriemoduls (20, 30) stützt, wobei das zweite elastische Stützteil Folgendes umfasst
ein zweites Stützelement (60-66), das an dem Batteriemodul (20, 30) angeordnet und horizontal an dem Gehäuse (10) befestigt ist, und
eine Blattfeder (62a-66a), die unter dem zweiten Stützelement (60-66) bereitgestellt ist, um das obere Teil des Batteriemoduls (20, 30) nach unten elastisch zu stützen,
wobei das Batteriemodul (20, 30) in mehreren Stufen innerhalb des Gehäuses (10) bereitgestellt ist,
wobei das erste elastische Stützteil fest an dem zweiten elastischen Stützteil bereitgestellt ist,
wobei das erste elastische Stützteil ein unteres Teil eines Batteriemoduls (20, 30), das über dem ersten elastischen Stützteil angeordnet ist, elastisch stützt und das zweite elastische Stützteil ein oberes Teil eines anderen Batteriemoduls (20, 30), das unter dem zweiten elastischen Stützteil angeordnet ist, elastisch stützt.

2. Batteriepack (1) für ein Energiespeichersystem nach Anspruch 1, wobei ein Schlitz (72a) in einer horizontalen Richtung in dem Verriegelungsteil gebildet ist und eine Führungsschaufel (20a, 30a), die an dem Batteriemodul (20, 30) gebildet ist, dort hindurch eingeführt und an dem Schlitz (72a) geführt ist.

3. Batteriepack (1) für ein Energiespeichersystem nach Anspruch 1, wobei das Batteriemodul (20, 30) in Vielzahl überlappend in vorderen und hinteren Richtungen innerhalb des Gehäuses (10) bereitgestellt ist und zwischen den Batteriemodulen (20, 30) ein mittleres Stützteil (50), das in einer Plattenform gebildet ist, fest an dem Gehäuse (10) montiert ist, um ein Batteriemodul (30) in einer Rückseite fest zu stützen, und in der Vorderseite eines Batteriemoduls (20), das sich an der vordersten Position befindet, ein vorderes Stützteil (40) in einer Plattenform in dem Gehäuse (10) montiert ist.

4. Batteriepack (1) für ein Energiespeichersystem nach Anspruch 3, wobei ein elastisches Element zwischen dem Batteriemodul (20, 30) und dem mittleren Stützteil (50) oder zwischen dem Batteriemodul (20, 30) und dem vorderen Stützteil (40) enthalten ist.

## Revendications

1. Bloc-batterie (1) pour un système de stockage d'énergie, le bloc-batterie (1) comprenant :
un boîtier (10) dans lequel un module de batterie (20, 30) est placé,
une première partie de support élastique s'étendant dans une direction, fixée à l'intérieur du boîtier (10), permettant aux extrémités inférieures opposées du module de batterie (20, 30) d'être supportées et logées, ladite première partie de support élastique comprenant une paire de premiers éléments de support (70-75),
chaque premier élément de support (70-75) comprenant :
une partie de support supportant l'une des extrémités inférieures du module de batterie (20, 30), et
une partie de verrouillage pliée à partir de la partie de support pour limiter le mouvement du module de batterie (20, 30) dans une direction horizontale,
un ressort à lame (71a, 73a, 75a) étant compris sur l'une des parties de verrouillage et supportant élastiquement un côté de l'extrémité inférieure du module de batterie (20, 30) vers un autre côté de l'extrémité inférieure, et
une seconde partie de support élastique s'étendant dans une direction croisant la première partie de support élastique, supportant une extrémité supérieure du module de batterie (20, 30), ladite seconde partie de support élastique comprenant
un second élément de support (60-66) disposé sur le module de batterie (20, 30) et fixé horizontalement au boîtier (10), et
un ressort à lame (62a-66a) prévu sous le second élément de support (60-66) pour supporter élastiquement la partie supérieure du module de batterie (20, 30) vers le bas,
ledit module de batterie (20, 30) étant prévu sur de multiples étages à l'intérieur du boîtier (10),
ladite première partie de support élastique étant prévue de manière fixe sur la seconde partie de support élastique,
ladite première partie de support élastique supportant élastiquement une partie inférieure d'un module de batterie (20, 30) disposé au-dessus de la première partie de support élastique, et ladite seconde partie de support élastique supportant élastiquement une partie supérieure d'un autre module de batterie (20, 30) disposé au-dessous de la seconde partie de support élastique.

2. Bloc-batterie (1) pour un système de stockage d'énergie de la revendication 1, une fente (72a) étant formée dans une direction horizontale dans la partie de verrouillage, et une lame de guidage (20a, 30a) formée sur le module de batterie (20, 30) étant insérée à travers celle-ci et guidée sur la fente (72a).

3. Bloc-batterie (1) pour un système de stockage d'énergie de la revendication 1, ledit module de batterie (20, 30) étant prévu en une pluralité se chevauchant dans les directions avant et arrière à l'intérieur du boîtier (10), et entre les modules de batterie (20, 30), une partie de support centrale (50) formée en forme de plaque étant assemblée de manière fixe au boîtier (10) pour supporter de manière fixe un module de batterie (30) dans un côté arrière, et à l'avant d'un module de batterie (20) situé au niveau de la position la plus à l'avant, une partie de support avant (40) en forme de plaque étant assemblée dans le boîtier (10).

4. Bloc-batterie (1) pour un système de stockage d'énergie de la revendication 3, un élément élastique étant compris entre le module de batterie (20, 30) et la partie de support centrale (50) ou entre le module de batterie (20, 30) et la partie de support avant (40).
